# EUROPEAN PATENT APPLICATION

(11) **EP 3 258 082 A1**
(43) Date of publication of application: **20.12.2017**
(21) Application number: 16001344.7
(22) Date of filing: 15.06.2016
(51) Int. Cl.: F02C 7/143, F02C 7/224, F17C 9/02, F17C 9/04, F25B 47/02, F01D 25/02

(54) **A METHOD OF OPERATING A POWER GENERATOR UNIT**

(71) Applicant: Linde Aktiengesellschaft, 80331 München (DE)
(72) Inventor: Peakman, Kevin, Burraneer, NSW 2230 (AU)
(74) Representative: Richmond, Sarah

(57) **Abstract**

The present invention relates to a method of operating a power generator unit (100) comprising a gas turbine or gas engine (130), wherein a heat exchange is conducted between liquefied fuel gas and air, in the course of which the liquefied fuel gas is vaporised and the air is cooled down, and wherein the vaporised fuel gas and the cooled down air are used to fuel the gas turbine or gas engine (130).

## Description

The invention relates to a method of operating a power generator unit comprising a gas turbine or gas engine and a fuel-air-preconditioning unit for a power generation unit.

### Prior Art

Power generator units comprise gas turbines or gas engines, which can be fuelled by a mixture of air and fuel gas in order to generate power. Ambient air can be sucked in and mixed with the fuel gas. With increasing temperature of the ambient air, the air density decreases. Thus, less air on a mass basis is available for the fuel gas-air-mixture. The power output of the gas turbine or gas engine decreases with increasing air temperature, which is referred to as de-rating of the gas engine/turbine.

The fuel gas is particularly stored in the liquid phase as liquefied fuel gas, e.g. in an expedient storage tank. The liquefied fuel gas is conducted from the storage tank to the power generator unit. Air, particularly ambient air, is sucked in, e.g. by an expedient air blower or suction fan, and conducted to the power generator unit.

It is desirable to increase efficiency of a gas turbine or gas engine, especially by reducing the effects of de-rating of the gas engine/turbine.

### Disclosure of the invention

The invention relates to a method of operating a power generator unit and a fuel-air-preconditioning unit for a power generation unit with the features of the independent claims. Further advantages and embodiments of the invention will become apparent from the description and the appended figures.

According to the invention, a heat exchange is conducted between liquefied fuel gas and air, especially ambient air, in the course of which the liquefied fuel gas is vaporised and the air is cooled down. For this purpose, the corresponding fuel-air-preconditioning unit comprises at least one heat exchanger. The vaporised fuel gas and the cooled down air are used to fuel the gas turbine or gas engine. For this purpose, the fuel-air-preconditioning unit comprises conduction means adapted to conduct the vaporised fuel gas and the cooled down air to a corresponding gas turbine or gas engine. This conduction means can e.g. comprise a valves, conduits, pipes, pipelines, etc. The cooled down air can be conducted to an air inlet of the gas turbine/engine, the fuel gas to a gas inlet. There, the cooled down air and the fuel gas are especially mixed and fed into the gas turbine/engine.

The fuel-air-preconditioning unit is especially adapted to perform a preferred embodiment of the method according to the invention. The fuel-air-preconditioning unit can be connected with different elements of a power generator, especially with a storage tank, inside which the fuel gas is stored, with an air inlet, and/or with the gas turbine/engine by the conducting means.

### Advantages of the invention

The temperature of the air used to fuel the gas turbine/engine can especially be maintained below an upper limit or can particularly be regulated to a predetermined set-temperature. Thus, a de-rating can be prevented and the efficiency of the gas turbine/engine can be increased. It can particularly be guaranteed that the temperature of the air fed into the gas turbine/engine does not exceed a certain limit, such that the air density does not fall below a certain limit and that a desired mass ratio of the fuel gas-air-mixture can be maintained. Thus, efficiency of the combustion of the fuel gas-air-mixture and produced power can be increased and a constant power output can be guaranteed, even if the ambient air temperature varies, e.g. due to weather conditions.

Energy released in the course of the liquefied fuel gas vaporisation is not wasted, but can be further utilised in order to cool down the air. Furthermore, it can be guaranteed that the fuel gas is fed into the gas turbine/engine above a certain minimum temperature. Thus, it is prevented that too cold fuel gas or even liquid fuel gas is used to fuel the gas turbine/engine, which could impair function of the gas turbine/engine.

Preferably, liquefied natural gas (LNG) is used as the liquefied fuel gas. Thus, a mixture of natural gas (NG) and air is used to fuel the gas turbine/engine. Liquefied natural gas is usually stored at temperatures of approximately -160°C to -165°C. After the vaporisation, natural gas with temperatures especially between 0°C and 50°C is fed into the gas turbine/engine. Thus, a particularly advantageous heat exchange between liquefied natural gas and air can be conducted and the air can effectively be cooled down to expedient temperatures.

Advantageously, depositions, especially moisture and/or CO₂, deposited in the course of the cooling down of the air are removed. When air is cooled down in the course of the heat exchange, particularly by the use of liquefied natural gas, moisture and/or CO₂ can freeze out and can be deposited in the fuel-air-preconditioning unit, especially in the heat exchanger. These impurities are particularly removed in order to guarantee proper function of the fuel-air-preconditioning unit and the power generator unit.

Preferably, an exhaust gas exhausted by the gas turbine or the gas engine is used to remove the depositions. Exhaust gas exits the gas turbine/engine with temperatures typically around 300°C. The exhaust gas is expediently conducted through the fuel-air-preconditioning unit, especially though the heat exchanger, particularly in the reversed direction of the air flow. By means of the exhaust gas temperature, depositions such as water, ice and/or CO₂ ice are vaporised and can be conducted out of the heat exchanger and can e.g. be vented into the atmosphere.

According to an advantageous embodiment, a reversing heat exchanger is used to conduct the heat exchange between the liquefied fuel gas and the air. Flow directions of fluids conducted through a reversing heat exchanger can especially be alternated, enabling conducting liquefied natural gas and air on the one hand as well as exhaust gas on the other hand. Thus, a reversing heat exchanger is particularly advantageous to conduct the heat exchange and to remove the depositions.

Preferably, the reversing heat exchanger can be operated in two different operating modes. During a first operating mode ("air cooling mode") the liquefied fuel gas and the air are conducted through the reversing heat exchanger in order to vaporise the liquefied fuel gas and to cool down the air. For switching between the first operating mode and a second operating mode ("purging mode") valves can accordingly be switched in order to stop the flow of liquefied fuel gas and air and to conduct the exhaust gas through the reversing heat exchanger. The high temperature exhaust gas particularly evaporates any water or ice and sublimes any carbon dioxide ices that were potentially deposited during the preceding cooling operating mode. Switching between the two operating modes can be performed in regular intervals, e.g. after 1, 5, or 10 minutes.

Preferably, the reversing heat exchanger comprises at least one pair of heat exchanger units. The heat exchanger units are especially constructed identically and operated simultaneously. One heat exchanger unit of each pair is operated in the first operating mode, while the other heat exchanger unit of each pair is operated in the second operating mode. Thus, a constant supply of fuel gas-air-mixture to the gas turbine/engine can be provided, while the procured exhaust gas can simultaneously be used to remove depositions.

Preferably, the a plate heat exchanger (PHE), a plate and fin heat exchanger (PFHE) and/or a plate and shell heat exchanger (PSHE) is/are used as the reversing heat exchanger. Particularly, each heat exchanger unit can be constructed as a plate and fin heat exchanger (PFHE) or a plate and shell heat exchanger (PSHE).

A plate heat exchanger (PHE) comprises two alternating types of chambers separated from each other by plates, especially metal plates. Each of the two chamber types is provided for one of two fluids conducted through the PHE. Since the fluids are exposed to comparatively large surface areas of the plates, heat between the fluids can be exchanged with high efficiency and in a short amount of time.

A plate and fin heat exchanger (PFHE) comprises finned chambers. The fluids are conducted through alternating layers and are enclosed by side bars. Heat is transferred from one fluid through the fin interface to the other fluid. A plate and shell heat exchanger (PSHE) especially comprises a plate pack arranged in an outer shell. One fluid can be conducted through the plate pack, the other fluid can be conducted through the shell.

The invention further relates to a fuel-air-preconditioning unit for a power generator unit adapted to perform a preferred embodiment of the method according to the invention. Advantages and embodiments of this fuel-air-preconditioning unit according to the invention arise from the above description of the method according to the invention in an analogous manner.

It should be noted that the previously mentioned features and the features to be further described in the following are usable not only in the respectively indicated combination, but also in further combinations or taken alone, without departing from the scope of the present invention.

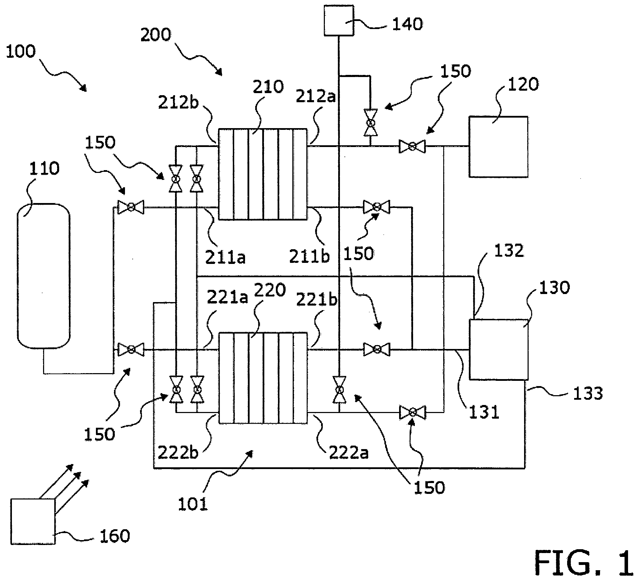

The present invention will now be described further, by way of example, with reference to the accompanying drawings, in which
- FIG. 1: schematically shows a power generator unit with a preferred embodiment of a fuel-air-preconditioning unit according to the invention, adapted to perform a preferred embodiment of the method according to the invention.

### Detailed description

FIG. 1 schematically shows a preferred embodiment of a power generator unit 100 according to the invention, adapted to be operated by a preferred embodiment of the method according to the invention.

The power generator unit 100 comprises a storage tank 110, inside which liquefied natural gas (LNG) is stored as fuel gas. An air blower 120 or air suction fan is provided to suck in ambient air. A gas turbine 130 is provided, which is fuelled by a mixture of natural gas (NG) and air. The gas turbine can be connected to a power generator in order to transform mechanical energy into electrical energy.

A preferred embodiment of a fuel-air-preconditioning unit 101 according to the invention is provided and connected with the storage tank 110, the air blower 120 and the gas turbine 130.

The fuel-air-preconditioning unit 101 comprises a reversing heat exchanger 200, comprising two plate and fin heat exchangers (PFHE) 210 and 220 as heat exchanger units. The reversing heat exchanger 200 can be operated in two different operating modes. A multitude of valves 150, especially in the form of ball valves or butterfly valves, is provided for switching between the two operating modes.

A control unit 160, for example a programmable logic controller (PLC), can be provided in order to operate the power generator unit 100 and the fuel-air-preconditioning unit 101, particularly to control the valves 150. The control unit 160 is particularly adapted to perform a preferred embodiment of a method according to the invention.

In the course of this preferred embodiment, the two plate and fin heat exchangers (PFHE) 210 and 220 are operated simultaneously, but in different operating modes. I.e. when the PFHE 210 is operated in a first operating mode, the PFHE 220 is operated in a second operating mode and vice versa. Switching between these two operating modes is performed in regular intervals, e.g. after five minutes. For switching between the operating modes, the control unit 160 controls the valves 160 accordingly.

During the first operating mode, a so called "air cooling mode", liquefied natural gas and air is conducted through the corresponding PFHE 210 or 220 in order to perform a heat exchange, thus vaporising the liquefied natural gas and cooling down the air. During the first operating mode a corresponding mixture of vaporised natural gas and cooled down air is conducted from the fuel-air-preconditioning unit 101 by conduction means to to the gas turbine 130. This conduction means can e.g. comprise a valves and pipes.

For this purpose, liquefied natural gas is conducted from the storage tank 110 to a first inlet 211 a or 221 a of the respective PFHE 210 or 220; ambient air can be conducted from the air blower 120 to a second inlet 212a or 222a of the PFHE 210 or 220.

A first outlet 211 b or 221 b of the corresponding PFHE 210 or 220 is connected with a gas inlet 131 of the gas turbine. Vaporised natural gas with temperatures in the range between 0°C and 50°C leaving the corresponding PFHE 210 or 220 is thus conducted from the respective first outlet 211 b or 221 b to the gas inlet 131.

A second outlet 212b or 222b of the corresponding PFHE 210 or 220 is connected with an air inlet 132 of the gas turbine. Cooled down air with temperatures in the range between 10°C and -10°C leaving the PFHE 210 or 220 is conducted from the respective second outlet 212b or 222b to the air inlet 132.

The corresponding natural gas-air-mixture is combusted in the gas turbine 130, in the course of which an exhaust gas is produced, exiting the gas turbine 130 through an exhaust outlet 133.

In the course of the heat exchange, moisture and/or CO₂ in the air can freeze out and impurities in the form of water, ice, and/or CO₂ ice can be deposited in the PFHE 210 and 220. In order to remove these depositions, the reversing heat exchanger is operated in the second operating mode, a so called "purging mode".

By actuating the corresponding valves 150, the exhaust outlet 133 can be connected with the second outlet 212b or 222b of the corresponding PFHE 210 or 220. Thus, the exhaust gas exiting the gas turbine 130 can be conducted through the PFHE 210 or 220 in the reversed direction of the airflow during the first operating mode. Moreover, the second inlet 212a or 222a of the PFHE 210 or 220 can be connected with a vent 140. By means of the exhaust gas temperature (up to 300°C), the depositions are vaporised and can be conducted out of the PFHE 210 or 220 through the corresponding second inlet 212a or 222a and can be vented into the atmosphere through vent 140.

After the regular interval of five minutes, when all depositions are removed from the respective PFHE 210 or 220, the corresponding valves 160 are actuated again for switching between the operating modes.

### Reference list

- 100: power generator unit
- 101: fuel-air-preconditioning unit
- 110: storage tank
- 120: air blower, air suction fan
- 130: gas turbine
- 131: gas inlet
- 132: air inlet
- 133: exhaust outlet
- 140: vent
- 150: valves, ball valves or butterfly valves
- 160: control unit, programmable logic controller, PLC

- 200: reversing heat exchanger
- 210: heat exchanger unit, plate and fin heat exchanger, PFHE
- 211a: first inlet
- 211b: first outlet
- 212a: second inlet
- 212b: second outlet

- 220: heat exchanger unit, plate and fin heat exchanger, PFHE
- 221a: first inlet
- 221b: first outlet
- 222a: second inlet
- 222b: second outlet

## Claims

1. Method of operating a power generator unit (100) comprising a gas turbine or gas engine (130),
- wherein a heat exchange is conducted between liquefied fuel gas and air, in the course of which the liquefied fuel gas is vaporised and the air is cooled down, and
- wherein the vaporised fuel gas and the cooled down air are used to fuel the gas turbine or gas engine (130).

2. The method according to claim 1, wherein depositions, especially moisture and/or CO₂, deposited in the course of the cooling down of the air are removed.

3. The method according to claim 2, wherein an exhaust gas exhausted by the gas turbine or the gas engine (130) is used to remove the depositions.

4. The method according to any one of the preceding claims, wherein a reversing heat exchanger (200) is used to conduct the heat exchange between the liquefied fuel gas and the air.

5. The method according to claim 2 or 3 and to claim 4, wherein
- during a first operating mode of the reversing heat exchanger (200), the liquefied fuel gas and the air are conducted through the reversing heat exchanger (200) in order to vaporise the liquefied fuel gas and to cool down the air, and wherein
- during a second operating mode, the exhaust gas is conducted through the reversing heat exchanger (200) in order to remove the depositions from the reversing heat exchanger (200).

6. The method according to claim 5, the reversing heat exchanger (200) comprising at least one pair of heat exchanger units (210, 220), wherein one heat exchanger unit of the at least one pair of heat exchanger units (210, 220) is operated in the first operating mode while the other heat exchanger of the at least one pair of heat exchanger units (210, 220) is operated in the second operating mode.

7. The method according any one of the claims 4 to 6, wherein a plate heat exchanger, a plate and fin heat exchanger (210, 220) and/or a plate and shell heat exchanger is/are used as the reversing heat exchanger (200).

8. The method according to any one of the preceding claims, wherein liquefied natural gas is used as the liquefied fuel gas.

9. Fuel-air-preconditioning unit (101) for a power generator unit (100) comprising:
- at least one heat exchanger (200) adapted to conduct a heat exchange between liquefied fuel gas and air, in the course of which the liquefied fuel gas is vaporised and the air is cooled down, and
- conduction means adapted to conduct the vaporised fuel gas and the cooled down air to at least one gas turbine or gas engine (130).

10. Fuel-air-preconditioning unit (101) according to claim 9, wherein the at least one heat exchanger (200) is constructed as at a reversing heat exchanger.

11. Fuel-air-preconditioning unit (101) unit according to claim 10, wherein the reversing heat exchanger (200) is constructed as plate heat exchanger, a plate and fin heat exchanger (210, 220) and/or a plate and shell heat exchanger.
